(19) Europäisches Patentamt / European Patent Office / Office européen des brevets

(11) **EP 1 814 324 A1**

(12) **EUROPEAN PATENT APPLICATION**
published in accordance with Art. 158(3) EPC

(43) Date of publication:
**01.08.2007 Bulletin 2007/31**

(51) Int Cl.:
*H04N 5/74* (2006.01)     *G03B 21/00* (2006.01)

(21) Application number: **05795815.9**

(86) International application number:
**PCT/JP2005/019110**

(22) Date of filing: **18.10.2005**

(87) International publication number:
**WO 2006/043541 (27.04.2006 Gazette 2006/17)**

(84) Designated Contracting States:
**DE ES FR GB IT NL**

(30) Priority: **20.10.2004 JP 2004304979**

(71) Applicant: **SHARP KABUSHIKI KAISHA**
**Osaka-shi,**
**Osaka-fu 545-0013 (JP)**

(72) Inventor: **YONEZAWA, Ryohichi**
**Tochigi 329-2163 (JP)**

(74) Representative: **Brown, Kenneth Richard et al**
**R.G.C. Jenkins & Co.**
**26 Caxton Street**
**London SW1H 0RJ (GB)**

(54) **IMAGE PROJECTING METHOD, PROJECTOR, AND COMPUTER PROGRAM**

(57) Zoom adjustment is to be automatically performed so that a projection image conforms with a projection area on a projection body (screen, for example). The positions of the four corners of the projection area and the positions of the four corners of the projection image are detected on an image captured by a camera unit, and the positions of the four corners of the projection area with respect to the positions of the four corners of the projection image is transformed to the positions on a panel coordinate system set in a spatial optical modulating device (panel). A first minimum target frame TF1 including the four corners of the projection area transformed on the panel coordinate system is set on the panel coordinate system and a second target frame TF2 in consideration of an aspect ratio of the projection image is set on the panel coordinate system based on the position of the first target frame TF1 on the panel coordinate system. The ratio of the size of the second target frame TF2 to the whole panel coordinate system is obtained as a zoom ratio.

FIG. 8

PANEL COORDINATE SYSTEM

EP 1 814 324 A1

**Description**

[Technical Field]

The present invention relates to an image projecting method that can automatically zoom the dimension of the image projected on a projection area set on a projection body (screen, for example) to fit the dimension of the projection area at a stage of projection preparation, and a projector to project the image by such image projecting method, and a computer program for a control circuit of such projector or for controlling the projector with a general-purpose computer.

[Background Art]

According to a projector for projecting an image on a projection body such as a screen, a white wall and a white board, it is necessary to previously adjust a plurality of set items regarding projection as projection preparation such that appropriate projection can be performed from a set position of the projector.

The above set items include focal point adjustment, color correction, image dimension adjustment (zoom adjustment), keystone distortion correction and the like. According to the zoom adjustment among the above set items, the projection image has been zoomed by adjusting a zooming function based on the relation between the distance between the projector and the projection body specifically such as the screen, which has been previously obtained or measured by a distance sensor provided in the projector, and the size of the projection area (the whole surface of the screen, for example) or the designated screen size (refer to patent documents 1, 2, 3 and 4).

In addition, there is a projector having a configuration such that a test pattern image according to each adjustment item is sequentially projected from a projector, and the state of the test pattern image projected on the projection body is for example captured by an imaging device to be fed back to perform adjustment and correction (refer to patent document 5). According to the projector in the patent document 5, in the case of zoom adjusting, the projection image is zoomed by adjusting a zooming function of a projection lens based on a user instruction or automatic determination of the projector so that the test pattern image for dimension adjustment projected on a projection body properly fall in a projection area. In addition, according to the projector, the optical axis passing through the lens center of the projection lens is off set (does not match with) the center of the projection image in general. In addition, zoom adjustment is usually performed based on the lens center (through which the optical axis passes).

[Patent Document 1] Japanese Patent Application Laid-Open No. H3-215841
[Patent Document 2] Japanese Patent Application Laid-Open No. H6-27431
[Patent Document 3] Japanese Patent Application Laid-Open No. 2000-81601
[Patent Document 4] Japanese Patent Application Laid-Open No. H5-323451
[Patent Document 5] Japanese Patent Application Laid-Open No. 2000-241874

[Disclosure of the Invention]

[Problems to be Solved by the Invention]

According to the projection preparation of the conventional projector disclosed in the patent document 5, the positions of four corners of the projection area (the whole surface of a screen as the projection body in general) and the positions of the four corners of the image to be projected are recognized by the projector side and the size of the image to be projected and keystone distortion are adjusted so that the four corners of the image to be projected conform with the four corners of the projection area. According to such adjustment, first, a zoom adjustment operation is performed so that the image is projected larger than the dimension of the projection area in order to correct the keystone distortion (it may be smaller in principle but it is not preferable for the reason described later). Then, the image to be projected is reduced in size unequally from the above state, more specially, the image to be projected is transformed reversely from the state of the keystone distortion of the image actually projected and displayed on the projection body, so that the keystone distortion is corrected to conform the four corners of the image to be projected with the four corners of the projection area.

Meanwhile, since reducing/enlarging an image by the zoom adjustment is optical reducing/enlarging by the zoom lens, image quality does not deteriorate although the size of the pixel projected on the projection body is changed. However, since the keystone distortion correction is performed by digital data processing is, digital zooming processing performed partially and unequally reducing/enlarging the image to be projected, the image quality deteriorates. Therefore, the higher the image digital reducing/enlarging ratio (zoom ratio) at the time of the keystone distortion correction is, the more the image quality deteriorates, so that it is desirable that the size of the criterion image for the keystone distortion correction is close to the size of the projection area as much as possible.

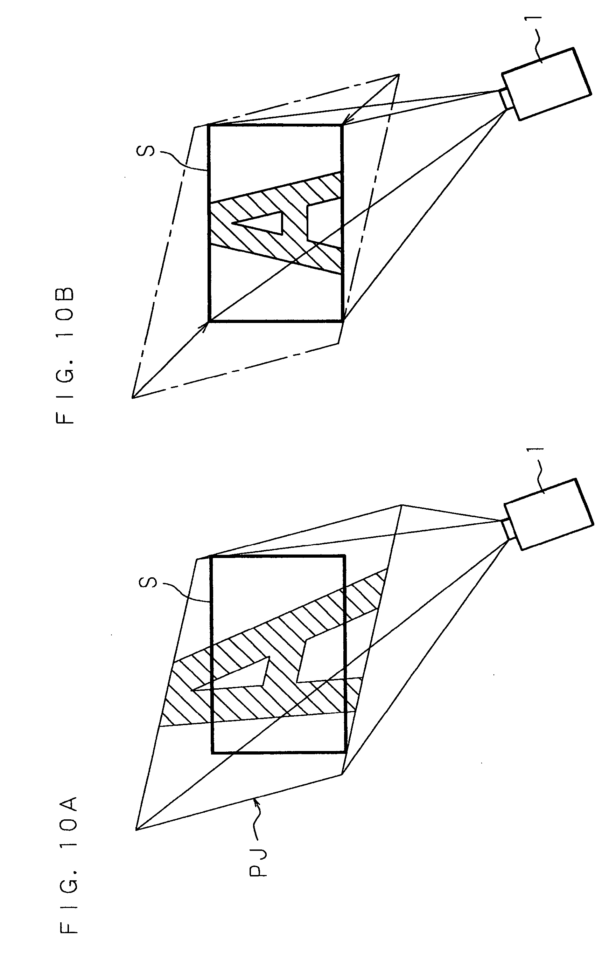

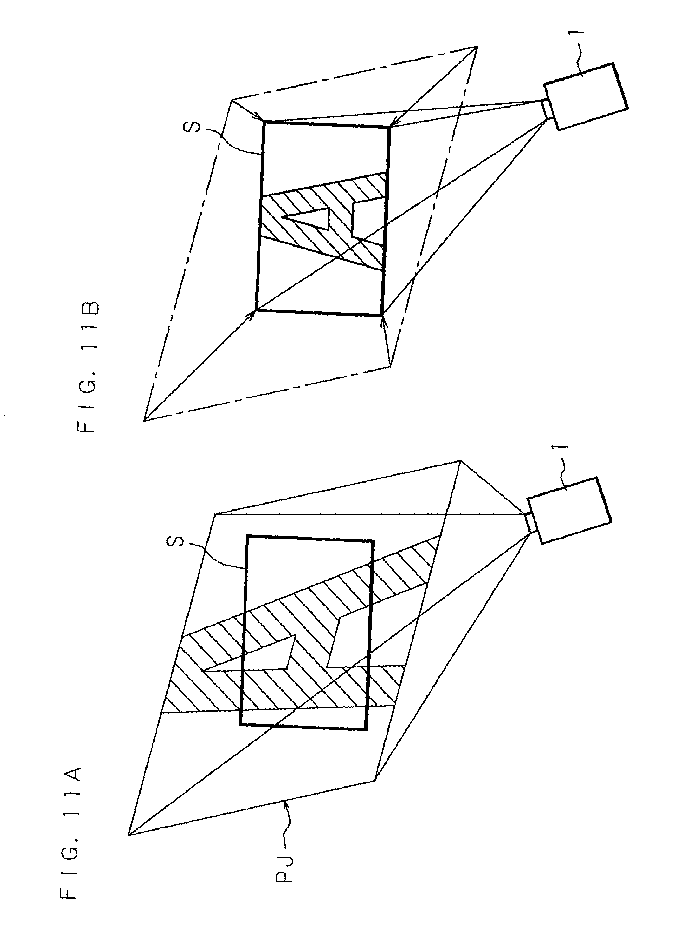

FIG. 10 and FIG. 11 are schematic views showing the states before and after the keystone distortion correction, for example. FIG. 10 shows a case where an image which becomes a criterion at the start of keystone distortion correction is relatively small (specifically, it is a little bigger than the size of the screen S as the projection area), and FIG. 11 shows a case where an image which becomes a criterion at the start of keystone distortion correction is relatively big (specifically, it is considerably bigger than the size of the screen S as the projection area).

In FIG. 10(a), a projection image PJ to be subject to the keystone distortion correction with respect to the screen S as the projection area (a description will be made assuming that the whole surface of the screen S is the projection area) is partially in contact with the outline of the screen S and a little bigger than the screen S. In addition, in FIG. 11 (a), a projection image PJ to be subject to the keystone distortion correction with respect to the screen S is completely outside the outline of the screen S and considerably big. Thus, the digital reduction ration (zoom ratio) of the projection image PJ when the keystone distortion is corrected so that the four corners of the projection image PJ conform with the four corners of the screen S from the states shown in FIG. 10(a) and 11(a) to the states shown in FIG. 10(b) and 11(b) is relatively low in the case shown in FIG. 10(b), but it is relatively high in the case shown in FIG. 11(b).

As described above, since the digital zoom ratio for the keystone distortion correction in the case shown in FIG. 10 is relatively low, the image quality does not deteriorate so much. However, in the case shown in FIG. 11, the digital zoom ratio for the keystone distortion correction is relatively high, so that the image quality considerably deteriorates. Therefore, at the time of the keystone distortion correction of the projection image, when the projection image is projected on the screen S (projection area) so that its fundamental size is bigger than the screen S (projection area) but small as much as possible, since the digital image process (reducing process) for the keystone distortion correction is not performed excessively, the high-quality image can be projected.

In addition, when the projection image which becomes the criterion at the time of the keystone distortion correction is projected in size smaller than the projection area on the projection body, or when any one of the four corners of the projection image is positioned in the projection area, it is necessary to enlarge the image to be projected entirely or in the direction of the one corner at least. Therefore, in this case, although the image has to be digitally enlarged, it is heretofore known that the digital enlargement of the image is accompanied by considerable image deterioration as compared with the digital reduction. In this respect also, it is desirable that the size of the image is to be reduced, that is, the projection image which becomes the criterion for the keystone distortion correction is somewhat larger than the projection area when the keystone distortion correction is performed by the digital zooming process.

Conventionally, according to the technique disclosed in the patent document 5, for example, after the zoom adjustment of the projection image has been automatically performed, the keystone distortion is corrected by comparing the length, inclination and the like of the sides opposed in the longitudinal and lateral directions of the projection image. Therefore, when the keystone distortion is corrected according to the invention disclosed in the patent document 5, the relation between reduction/enlargement of the image by the optical zooming and reduction and enlargement of the image by the digital image processing as described above is not considered.

The present invention was made in view of the above problems and it is an object of the present invention to provide an image projecting method in which the size of a projection image on a projection area can be adjusted, that is, zoomed so that image deterioration at the time of keystone distortion correction can be prevented as much as possible, and to provide a projector that projects an image by such image projecting method. In addition, it is another object of the present invention to project an image on a projection area, maintaining the aspect ratio of the image to be projected by such image projecting method and in the projector projecting an image by such image projecting method.

Furthermore, it is another object of the present invention to provide a computer program for a control circuit of a projector to implement above projector.

[Means for Solving the Problems]

An image projecting method according to the present invention to solve the above problems is an image projecting method for making spatial optical modulating means generate modulated light according to information representing a rectangular projection image to be projected on a rectangular projection area, and, at a time of making a projection lens capable of optically reducing/enlarging the image project the modulated light generated by said spatial optical modulating means, for projecting an image so as to become a rectangular image on said projection area by making said spatial optical modulating means generate modulated light according to information representing an image transformed from said rectangular projection image, and is characterized in that a reducing/enlarging ratio of said projection lens required for conforming the four corners of the projection image with the four corners of said projection area is obtained, based on the relative positional relation between the positions of the four corners of said projection area and the positions of the four corners of the projected projection image.

In addition, a projector according to the present invention to solve the above problem is a projector, comprising: spatial optical modulating means for generating modulation light according to information representing a rectangular projection image to be projected on a rectangular projection area; a projection lens for projecting the modulated light generated by said spatial optical modulating means on said rectangular projection area; and optical zooming means for optically reducing/enlarging the projection image by controlling said projection lens; and for projecting an image so as to become a rectangular image on said projection area by making said spatial optical modulating means generate modulated light according to information representing an image transformed from said rectangular projection image, and is characterized by comprising reducing/enlarging ratio calculating means for obtaining a reducing/enlarging ratio of the projection image by said optical zooming means required for conforming the four corners of said projection image with the four corners of said projection area, based on the relative positional relation between the positions of the four corners of said projection area and the positions of the four corners of the projected projection image.

According to the image projecting method and the projector of the present invention, the reducing/enlarging ratio by the projection lens required for conforming the four corners of the projection image with the four corners of the projection area is obtained based on the relative position relation between the positions of the four corners of the projection area and the positions of the four corners of the projected projection image.

In addition, an image projecting method according to the present invention is an image projecting method for making spatial optical modulating means generate modulated light according to information representing a rectangular projection image to be projected on a rectangular projection area, and, at a time of making a projection lens capable of optically reducing/enlarging the image project the modulated light generated by said spatial optical modulating means, for projecting an image so as to become a rectangular image on said projection area by making said spatial optical modulating means generate modulated light according to information representing an image transformed from said rectangular projection image, and is characterized by comprising: obtaining a reducing/enlarging ratio of said projection lens required for conforming the four corners of the projection image with the four corners of said projection area, based on the relative positional relation between the positions of the four corners of said projection area and the positions of the four corners of the projected projection image; and calculating a transformation amount of said rectangular projection image on said spatial optical modulating means so that the four corners of the projection image projected by reducing/enlarging by said projection lens according to the obtained reducing/enlarging ratio conforms with the four corners of said rectangular projection area.

Furthermore, a projector according to the present invention is a projector, comprising: spatial optical modulating means for generating modulation light according to information representing a rectangular projection image to be projected on a rectangular projection area; a projection lens for projecting the modulated light generated by said spatial optical modulating means on said rectangular projection area; and optical zooming means for optically reducing/enlarging the projection image by controlling said projection lens; and for projecting an image so as to become a rectangular image on said projection area by making said spatial optical modulating means generate modulated light according to information representing an image transformed from said rectangular projection image, and is characterized by comprising: reducing/enlarging ratio calculating means for obtaining a reducing/enlarging ratio of the projection image by said optical zooming means required for conforming the four corners of said projection image with the four corners of said projection area, based on the relative positional relation between the positions of the four corners of said projection area and the positions of the four corners of said projected projection image; and calculating means for calculating a transformation amount of said rectangular projection image on said spatial optical modulating means so that the four corners of the projection image projected by reducing/enlarging by said projection lens according to the obtained reducing/enlarging ratio conforms with the four corners of said rectangular projection area.

According to the image projecting method and the projector of the present invention, the reducing/enlarging ratio by the projection lens required for conforming the four corners of the projection image with the four corners of the projection area is obtained based on the relative positional relation between the positions of the four corners of the projection area and the positions of the four corners of the projected projection image, and the transformation amount of the projection image in the spatial optical modulating means is calculated so that the four corners of the projection image to be projected reduced/enlarged by the projection lens according to the reducing/enlarging ratio conform with the four corners of the projection area.

In addition, the image projecting method in the abovementioned image projecting method of the present invention is characterized by comprising: capturing, by imaging means, an image including the positions of the four corners of said projection image when said spatial optical modulating means generates modulated light according to information representing said projection image not transformed and the modulated light generated by said spatial optical modulating means is projected on said projection area through said projection lens and the positions of the four corners of said projection area; specifying, from the image captured by said imaging means, the positions of the four corners of said projection area and the positions of the four corners of said projection image on a coordinate system set in said imaging means; transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and obtaining the reducing/enlarging ratio of said projection lens based on the positions of the four corners of said projection area transformed to the positions on the coordinate system set in said spatial optical modulating means.

Furthermore, the projector in the abovementioned projector of the present invention is characterized by comprising: imaging means for capturing an image including the positions of the four corners of said projection image when said spatial optical modulating means generates modulated light according to information representing said projection image not transformed and the modulated light generated by said spatial optical modulating means is projected on said projection area through said projection lens and the positions of the four corners of said projection area; specifying means for, from the image captured by said imaging means, specifying the positions of the four corners of said projection area and the positions of the four corners of said projection image on a coordinate system set in said imaging means; coordinate system transforming means for transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and reducing/enlarging ratio calculating means for obtaining the reducing/enlarging ratio of said projection lens based on the positions of the four corners of said projection area transformed to the positions on the coordinate system set in said spatial optical modulating means.

According to the image projecting method and the projector in the abovementioned image projecting method and the projector of the present invention, the modulated light generated by the spatial optical modulating means according to the information representing the projection image not untransformed is projected on the projection area through the projection lens, and from the image captured by the imaging means, the positions of the four corners of the projection area and the positions of the four corners of the projection image are specified on the coordinate system set in the imaging means. Then, the positions of the four corners of the projection area specified on the coordinate system set in the imaging means are transformed to the positions on the coordinate system set in the spatial optical modulating means, based on the relation between the positions of the four corners of the projection image specified on the coordinate system set in the imaging means and the coordinate system set in the spatial optical modulating means, and the reducing/enlarging ratio of the projection lens is obtained based on the transformed positions of the four corners of the projection area.

In addition, the image projecting method in the abovementioned image projecting method of the present invention is characterized by comprising: setting, on the coordinate system set in said spatial optical modulating means, a target frame for projecting said projection image with a minimum size including the positions of the four corners of said projection area transformed to the positions on the coordinate system set in said spatial optical modulating means; and obtaining the reducing/enlarging ratio of said projection lens from the ratio between the size of the coordinate system set in said spatial optical modulating means and the size of the set target frame.

In addition, the projector in the abovementioned projector of the present invention is characterized by comprising: target frame setting means for setting, on the coordinate system set in said spatial optical modulating means, a target frame for projecting said projection image with a minimum size including the positions of the four corners of said projection area transformed to the positions on the coordinate system set in said spatial optical modulating means, wherein said reducing/enlarging ratio calculating means obtains the reducing/enlarging ratio of said projection lens from the ratio between the size of the coordinate system set in said spatial optical modulating means and the size of said target frame set by said target frame setting means.

According to the image projecting method and the projector in the abovementioned image projecting method and the projector of the present invention, the target frame for projecting the projection image with the minimum size including the positions of the four corners of the projection area transformed in the positions on the coordinate system set in the spatial optical modulating means is set on the coordinate system set in the spatial optical modulating means, and the reducing/enlarging ratio of the projection lens is obtained from the ratio of the size of the set target frame with respect to the size of the coordinate system set in the spatial optical modulating means.

In addition, the image projecting method in the abovementioned image projecting method of the present invention is characterized in that setting of said target frame is performed by: setting, on the coordinate system set in said spatial optical modulating means, a rectangular first target frame with a minimum size including the positions of the four corners of said projection area transformed to the positions on the coordinate system set in said spatial optical modulating means; and setting, on the coordinate system set in said spatial optical modulating means, a second target frame having the same aspect ratio as that of said projection image, based on the position of said first target frame on the coordinate system set in said spatial optical modulating means.

In addition, the projector in the abovementioned projector of the present invention is characterized in that said target frame setting means comprises: means for setting, on the coordinate system set in said spatial optical modulating means, a rectangular first target frame with a minimum size including the positions of the four corners of said projection area transformed to the positions on the coordinate system set in said spatial optical modulating means, and means for setting, on the coordinate system set in said spatial optical modulating means, a second target frame having the same aspect ratio as that of said projection image, based on the position of the first target frame set by said means on the coordinate system set in said spatial optical modulating means.

According to the image projecting method and the projector in the abovementioned image projecting method and the projector of the present invention, at first, the rectangular first target frame having the minimum size including the positions of the four corners of the projection area transformed to the positions on the coordinate system set in the spatial optical modulating means is set on the coordinate system set in the spatial optical modulating means, and then the second target frame having the same aspect ratio as that of the projection image is set on the coordinate system set in the spatial optical modulating means based on the position of the first target frame on the coordinate system set in the spatial optical modulating means.

In addition, the image projecting method in the abovementioned image projecting method of the present invention is characterized in that the transformation of the positions of the four corners of said projection area specified on the coordinate system set in said imaging means to the positions on the coordinate system set in said spatial optical modulating means is performed using two-dimensional projection transformation based on the relation between the positions of the four corners of said projection image specified on the coordinate system set in said imaging means and the positions of the four corners of said projection image on the coordinate system set in said spatial optical modulating means.

In addition, the projector in the abovementioned projector of the present invention is characterized in that said coordinate system transforming means transforms the positions of the four corners of said projection area specified on the coordinate system set in said imaging means, to the positions on the coordinate system set in said spatial optical modulating means using two-dimensional projection transformation based on the relation between the positions of the four corners of said projection image specified on the coordinate system set in said imaging means and the positions of the four corners of said projection image on the coordinate system set in said spatial optical modulating means.

According to the image projecting method and the projector in the abovementioned image projecting method and the projector of the present invention, the transformation of the positions of the four corners of the projection area specified on the coordinate system set in the imaging means to the positions on the coordinate system set in the spatial optical modulating means is performed using two-dimensional projection transformation based on the relation between the positions of the four corners of the projection image specified on the coordinate system set in the imaging means and the positions of the four corners of the projection image on the coordinate system set in the spatial optical modulating means.

Furthermore, a projector according to the present invention is a projector, comprising: spatial optical modulating means for generating modulation light according to information representing a rectangular projection image to be projected on a rectangular projection area; a projection lens for projecting the modulated light generated by said spatial optical modulating means on said rectangular projection area; optical zooming means for optically reducing/enlarging the projection image by controlling said projection lens; and an imaging device; and for obtaining a reducing/enlarging ratio of the projection image by said optical zooming means required for conforming the four corners of the projection image with the four corners of said projection area based on the relative positional relation between the positions of the four corners of said projection area and the positions of the four corners of the projected projection image, in order to project an image so as to become a rectangular image on said projection area by making said spatial optical modulating means generate modulated light according to information representing an image transformed from said rectangular projection image, and is characterized by comprising: means for making said spatial optical modulating means generate modulated light representing a test pattern indicating the four corners of said rectangular projection image and for projecting it from said projection lens on the rectangular projection area; means for making said imaging device capture an image of a state where said test pattern is projected toward said rectangular projection area; means for detecting the positions of the four corners of said rectangular projection area on a coordinate system set in said imaging device from the image captured by said imaging device; means for detecting the positions of the four corners of said projected test pattern on the coordinate system set in said imaging device from the image captured by said imaging device; means for transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and means for obtaining the reducing/enlarging ratio of said projection image based on the positions of the four corners of said projection area transformed to the positions on the coordinate system set in said spatial optical modulating means.

According to the projector of the present invention, the modulated light representing the test pattern indicating the four corners of the rectangular projection image is generated by the spatial optical modulating means and projected toward the rectangular projection area from the projection lens, and the positions of the four corners of the rectangular projection area and the four corners of the projected test pattern are detected on the coordinate system set in the imaging device from the image captured by the imaging device. Then, the positions of the four corners of the projection area specified on the coordinate system set in the imaging means are transformed to the positions on the coordinate system set in the spatial optical modulating means, based on the relation between the positions of the four corners of the projection image specified on the coordinate system set in the imaging means and the coordinate system set in the spatial optical modulating means, and the reducing/enlarging ratio of the projection image is obtained based on the transformed positions of the four corners of the projection area.

In addition, the projector in the abovementioned projector of the present invention is characterized in that said means for obtaining the reducing/enlarging ratio comprises: means for setting, on the coordinate system set in said spatial optical modulating means, a rectangular first target frame with a minimum size including the positions of the four corners of said projection area transformed to the positions on the coordinate system set in said spatial optical modulating means; and means for setting, on the coordinate system set in the spatial optical modulating means, a second target frame having the same aspect ratio as that of the projection image, based on the position of said first target frame on the coordinate system set in said spatial optical modulating means.

According to the projector in the abovementioned projector of the present invention, at first, the rectangular first target frame with the minimum size including the positions of the four corners of the projection area transformed to the positions on the coordinate system set in the spatial optical modulating means is set on the coordinate system set in the spatial optical modulating means, and then the second target frame having the same aspect ratio as that of the projection image is set on the coordinate system set in the spatial optical modulating means, based on the position of the first target frame on the coordinate system set in the spatial optical modulating means.

A computer program according to the present invention is a computer program causing a computer, that comprises: spatial optical modulating means for generating modulation light according to information representing a rectangular projection image to be projected on a rectangular projection area; a projection lens for projecting the modulated light generated by said spatial optical modulating means on said rectangular projection area; optical zooming means for optically reducing/enlarging the projection image by controlling said projection lens; and an imaging device; and that projects a rectangular image on said projection area by making said spatial optical modulating means generate modulated light according to information representing an image transformed from said rectangular projection image, to obtain a reducing/enlarging ratio of the projection image by said optical zooming means required for conforming the four corners of said projection image with the four corners of said projection area based on the relative positional relation between the positions of the four corners of said projection area and the positions of the four corners of said projected projection image, and is characterized by comprising: a procedure of making said spatial optical modulating means generate modulated light representing a test pattern indicating the four corners of said rectangular projection image and projecting it toward said rectangular projection area from said projection lens; a procedure of making said imaging device capture the image of the state where said test pattern is projected on said rectangular projection area; a procedure of detecting the positions of the four corners of said rectangular projection area on a coordinate system set in said imaging device from the image captured by said imaging device; a procedure of detecting the positions of the four corners of said projected test pattern on the coordinate system set in said imaging device from the image captured by said imaging device; a procedure of transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and a procedure of obtaining the reducing/enlarging ratio of said projection image based on the positions of the four corners of said projection area transformed to the positions on the coordinate system set in said spatial optical modulating means.

According to the control of the computer program of the present invention, the test pattern indicating the four corners of the projection image is projected toward the projection area, and this state is captured by the imaging device. The positions of the four corners of the rectangular projection area and the positions of the four corners of the projected test pattern are detected on the coordinate system set in the imaging device from the above image. The positions of the four corners of the projection area specified on the coordinate system set in the imaging means are transformed to the positions on the coordinate system set in the spatial optical modulating means, based on the relation between the positions of the four corners of the projection image specified on the coordinate system set in the imaging means and the coordinate system set in the spatial optical modulating means. The reducing/enlarging ratio of the projection image is obtained based on the positions of the four corners of the transformed projection area.

The computer program in the abovementioned computer program of the present invention is characterized in that said procedure of obtaining the reducing/enlarging ratio comprises: a procedure of setting, on the coordinate system set in said spatial optical modulating means, a rectangular first target frame with a minimum size including the positions of the four corners of said projection area transformed to the positions on the coordinate system set in said spatial optical modulating means; and a procedure of setting, on the coordinate system set in the spatial optical modulating means, a second target frame having the same aspect ratio as that of the projection image, based on the position of said first target frame on the coordinate system set in said spatial optical modulating means.

According to the computer program in the abovementioned computer program of the present invention, at first, the rectangular first target frame with the minimum size including the positions of the four corners of the projection area transformed to the positions on the coordinate system set in the spatial optical modulating means is set on the coordinate system set in the spatial optical modulating means, and then by setting, on the coordinate system set in the spatial optical modulating means, the second target frame having the same aspect ratio as that of the projection image based on the position of the first target frame on the coordinate system set in the spatial optical modulating means, the reducing/enlarging ratio is obtained.

[Effect of the Invention]

According to the image projecting method and projector of the present invention, as described above, the reducing/enlarging ratio of the projection lens required for conforming the four corners of the projection image with the four corners of the projection area is automatically obtained.

In addition, according to the image projecting method and projector of the present invention, the reducing/enlarging ratio of the projection lens required for conforming the four corners of the projection image with the four corners of the projection area is automatically obtained, and the keystone distortion is corrected by projecting the projection image automatically reduced/enlarged by the above automatically obtained reducing/enlarging ratio to conform the four corners of the projection image with the four corners of the projection area.

In addition, according to the image projecting method and the projector in the abovementioned image projecting method and the projector of the present invention, the modulated light generated by the spatial optical modulating means according to the information representing the projection image not transformed is projected on the projection area through the projection lens, and by specifying the positions of the four corners of the projection area and the positions of the four corners of the projection image on the coordinate system set in the imaging means from the image captured by the imaging means, the reducing/enlarging ratio is automatically obtained.

In addition, according to the image projecting method and the projector in the abovementioned image projecting method and the projector of the present invention, since the target frame for projecting the projection image with the minimum size including the positions of the four corners of the projection area transformed to the positions on the coordinate system set in the spatial optical modulating means is set on the coordinate system set in the spatial optical modulating means and the optical reducing/enlarging of the image is performed, the digital reducing/enlarging of the image at the time of the keystone distortion correction can be minimized, so that the image deterioration can be minimized.

In addition, according to the image projecting method and the projector in the abovementioned image projecting method and the projector of the present invention, since, at first, the first target frame is set on the coordinate system set in the spatial optical modulating means, and then the second target frame having the same aspect ratio as that of the projection image is set on the coordinate system set in the spatial optical modulating means, projection images having various kinds of aspect ratios can be projected without changing the aspect ratio.

In addition, according to the image projecting method and the projector in the abovementioned image projecting method and the projector of the present invention, since the transformation of the positions of the four corners of the projection area specified on the coordinate system set in the imaging means to the positions on the coordinate system set in the spatial optical modulating means is performed using the two-dimensional projection transformation based on the relation between the positions of the four corners of the projection image specified on the coordinate system set in the imaging means and the projection image on the coordinate system set in the spatial optical modulating means, the heretofore known method can be used.

In addition, according to the projector of the present invention, since the positions of the four corners of the rectangular projection area and the positions of the four corners of the projected test pattern are detected on the coordinate system set in the imaging device from the image captured by the imaging device and the reducing/enlarging ratio for the projection image can be automatically obtained based on the above result, the adjustment for conforming the size of the projection image with the projection area can be automatically performed.

Furthermore, according to the projector in the abovementioned projector of the present invention, since, at first, the first target frame is set on the coordinate system set in the spatial optical modulating means, and then the second target frame having the same aspect ratio as that of the projection image is set on the coordinate system set in the spatial optical modulating means based on the position of the first target frame on the coordinate system set in the spatial optical modulating means, projection images having various kinds of aspect ratios can be projected without changing the aspect ratio.

According to the computer program of the present invention, the above described image projecting method can be implemented by controlling the abovementioned projector or controlling the projector from the outside with a general-purpose computer.

[Description of the Drawings]

FIG. 1 is a block diagram showing the internal configuration example of a projector according to one embodiment of the present invention;

FIG. 2 is a schematic view showing the pixel configuration of a spatial optical modulating device (panel) in a projection device of the projector according to the present invention;

FIG. 3 is a schematic view showing a test pattern used for both zooming adjustment and keystone distortion correction in the projector according to the present invention;

FIG. 4 is a schematic view showing an appearance of a remote controller of the projector according to the present invention;

FIG. 5 is a schematic view showing the state of a screen and a projection image on a camera coordinate system;

FIG. 6 is a schematic view showing the state in which the coordinate values of the four corners of the screen on the camera coordinate system are transformed to a panel coordinate system using heretofore known two-dimensional projection transformation;

FIG. 7 is a schematic view showing the state in which a first target frame is set based on the coordinate values of the four corners of the screen on the panel coordinate system;

FIG. 8 is a schematic view showing the state in which a second target frame is set based on the first target frame set on the panel coordinate system;

FIG. 9 is a flowchart showing processing steps for carrying out a computer program according to the present invention by a system control unit for automatic adjustment by the projector according to the present invention;

FIG. 10 is a schematic view to explain conventional problems; and

FIG. 11 is a schematic view to explain conventional problems.

[Explanation of the Reference Numerals]

| | |
|---|---|
| 1 | PROJECTOR |
| 2 | PROJECTION LENS |
| 3 | CAMERA UNIT |
| 8 | PROJECTION DEVICE UNIT |
| 8A | SPATIAL OPTICAL MODULATING DEVICE (PANEL) |
| 10 | SYSTEM CONTROL UNIT |
| 10P | PROGRAM |
| 11 | DETECTION UNIT |
| 12 | OPERATION UNIT |
| 25 | TEST PATTERN IMAGE |
| 25B | THICK FRAME PORTION (OF TEST PATTERN IMAGE) |
| S | SCREEN |
| TF1 | FIRST TARGET FRAME |
| TF2 | SECOND TARGET FRAME |

[Best Embodiment for Executing the Invention]

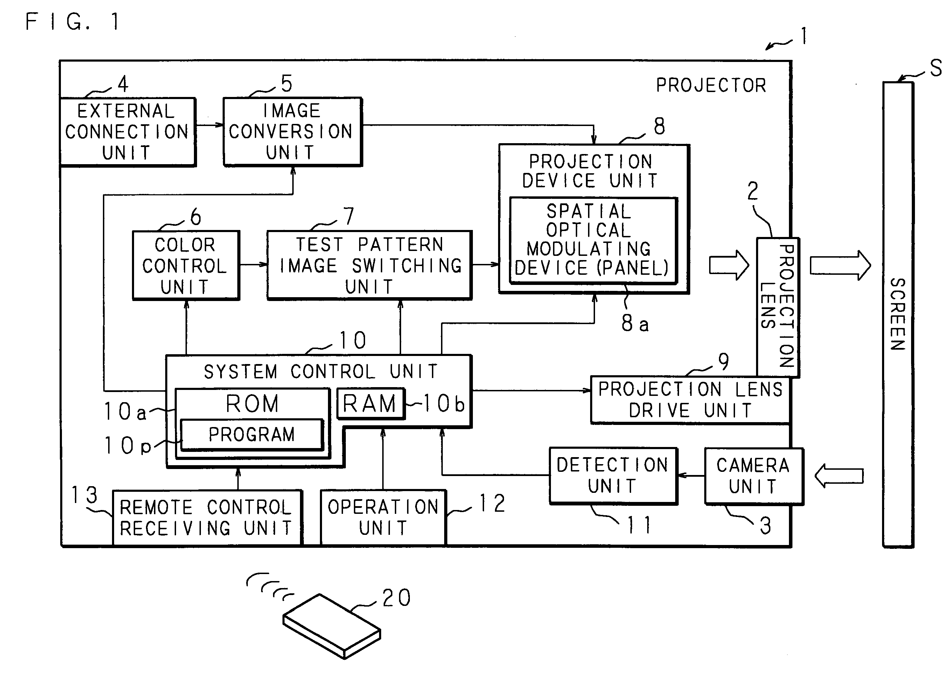

The present invention will be described with reference to the drawings showing the best embodiment thereof. FIG. 1 is a block diagram showing the internal configuration example of a projector according to one embodiment of the present invention. In addition, although a description will be made of a case where an image projecting method according to the present invention is implemented in a projector according to the present invention, the image projecting method of the present invention is applied to a case where not only a device configured as a projector but also a device combining a function as a projector and a projector only having a function to project an image are connected to a personal computer, for example, and controlled by the personal computer, for example.

A projector 1 according to this embodiment has an automatic adjusting function that can automatically prepare for projection. More specifically, the automatic adjusting function includes a function in which at the time of projection preparation, a test pattern image is projected on a screen S of a projection body from a projection lens 2, the state of the test pattern image projected on the screen S is captured by a camera unit 3, and based on the relative positional relation between the four corners of the projection area and four corners of the test pattern image obtained as its result, projection preparation such as the dimension, position and keystone distortion correction of the image to be projected is made. In addition, although the automatic adjusting function includes color correction, focal point adjustment and the like, since they do not have any relation to the present invention directly, their descriptions will be omitted.

In addition, it is to be noted that a description will be made of a case where the whole surface of the screen S as the projection body is used as the projection area in this embodiment. In this case, therefore, the four corners of the screen S become the four corners of the projection area. However, when the projection body is not a screen but a wall surface of a building, for example, a rectangular area having any desirable size by the user as the projection body can be set on the wall surface as the projection area (by drawing with a painter), or a rectangular area having any desirable size by the user can be set on a white board (by drawing with a marker pen). Here, an important point as the projection area is that in the image captured by the camera unit 3 of the projector according to the present invention, its four corners can be detected in the image captured by the camera unit 3 as will be described below, so that the projection area is not necessarily set as a rectangular figure and it can capture any figure as long as the positions of the four corners of the rectangle can be detected in the image captured by the camera unit 3 as described above.

The projector 1 comprises an external connection unit 4 and an image conversion unit 5 as units in which a process for the image for projection inputted from the outside is mainly performed. The projector 1 further comprises a color control unit 6, a test pattern image switching unit 7, a projection device unit 8, a projection lens driving unit 9, and a projection lens 2 as units in which the process regarding the projection is mainly performed. Furthermore, the projector 1 comprises the camera unit 3 and a detection unit 11 as units in which a process regarding automatic adjusting function is mainly performed. Still furthermore, the projector 1 comprises an operation unit 12 and a remote control receiver unit 13 of a remote controller 20 as means for receiving the operation by the user. In addition, the entire control of the projector 1 is performed by a system control unit 10.

The external connection unit 4 is connected to an external device for outputting an image for projection and inputs a rectangular image outputted from the external device and transmits it to the image conversion unit 5. The image conversion unit 5 performs a required converting process such as A/D conversion based on the control of the system control unit 10 and transmits the converted image to the projection device unit 8.

The color control unit 6 adjusts colors of the image to be projected. More specifically, the color control unit 6 adjusts the balance of each of colors of R (red), G (green) and B (blue) based on the control of the system control unit 10 to perform color correction of the image to be projected. In addition, the test pattern image switching unit 7 generates various kinds of test patterns required for the automatic adjusting function based on the control of the system control unit 10 and transmits them to the projection device unit 8 as test pattern images.

The projection device unit 8 builds in a spatial optical modulating device 8a that optically modulates the information (digital image data) of the projection image, that is, the image to be projected. Thus, the projection device unit 8 optically modulates the digital image data of the various kinds of images transmitted from the image conversion unit 5, the test pattern image switching unit 7 and the system control unit 10 that will be describe below by the spatial optical modulating device 8a and generates modulated light. The modulated light generated by the spatial optical modulating device 8a of the projection device unit 8 by such manner is projected on the external screen S through the projection lens 2. As a result, the image to be projected is displayed on the screen S.

As the spatial optical modulating device 8a, either a liquid crystal panel or a DMD (Digital Micromirror Device) is used in general. When the liquid crystal panel is used as the spatial optical modulating device 8a, by transmitting a light beam from a light source while each pixel corresponding to a dot unit of the digital data of the image to be projected displays each dot of the image, the modulated light displaying the image as a whole is projected and the image is displayed on the screen S finally. Alternatively, when the DMD is used as the spatial optical modulating device 8a, by reflecting a light beam from a light source while the reflection angle of a micromirror corresponding to a dot unit of the digital data of the image to be projected is switched, the image to be projected is represented by the reflected light (modulated light) as a whole and projected and finally displayed on the screen S.

In addition, in this embodiment, a configuration in which a liquid crystal panel is used as the spatial optical modulating device 8a is adopted, the image to be projected is displayed on the liquid crystal panel as the spatial optical modulating device 8a and when the light beam from a light source is transmitted to the displayed image and the image is projected by the projection lens 2, the image is projected on the screen S. However, as described above, when the DMD is used also, the image is represented by the whole reflected light (modulated light) by switching the reflection angle of the micromirror corresponding to the pixel of the digital image data. Therefore, each micromirror can be designated by corresponding it to the dot of the digital image data in the DMD as each pixel can be designated by corresponding it to the dot of the digital image data on the liquid crystal panel.

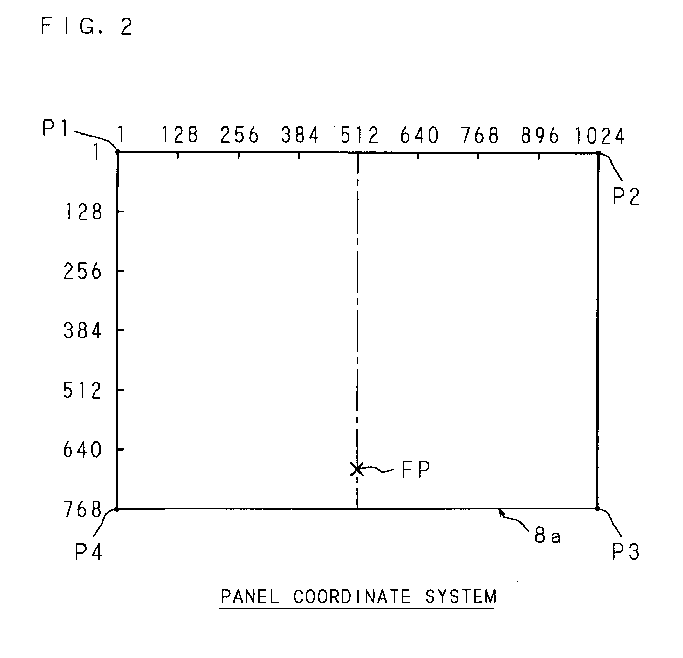

FIG. 2 is a schematic view showing a pixel configuration of the spatial optical modulating device 8a (referred to as a panel simply hereinafter) made by a liquid crystal panel in the projection device unit 8. According to one example of this embodiment, the panel 8a comprises a rectangular display area in which 1024 pixels are provided in the horizontal direction and 768 pixels are provided in the vertical direction in compliance with the XGA standard, on which a panel coordinate system whose x axis is set in the horizontal direction and whose y axis is set in the vertical direction with its origin at a pixel of a coordinate value (1, 1) at an upper left corner. Therefore, when the coordinate value of the panel coordinate system corresponding to each pixel in the horizontal direction and the vertical direction is transmitted from the system control unit 10 to the projection device unit 8, the projection device unit 8 specifies the position and dimension of an image to be displayed in the display area of the panel 8a on the panel coordinate system based on the coordinate value of the panel coordinate system. For example, when "128" is designated as the coordinate value in the horizontal direction and "128" is designated as the coordinate value in the vertical direction from the system control unit 10, the projection device unit 8 displays a dot at the position of the 128th pixel in the horizontal and vertical directions from the origin at the upper left corner in the panel 8a.

In addition, in the case where the DMD is used as the spatial optical modulating device 8a, the panel coordinate system can be set similar to the case where the above liquid crystal panel is used. However, as described above, since the configuration in which the liquid crystal panel is used as the spatial optical modulating device 8a is adopted in this embodiment, the following description will be made of the configuration in which the liquid crystal panel is used as the spatial optical modulating device 8a. However, the concept regarding the panel coordinate system in the case where the liquid crystal panel is used as the spatial optical modulating device 8a is the same as that in the case where the DMD is used basically.

The projection lenses 2 is, not shown, configured by a plurality of lenses such as a zoom (image dimension) adjusting lens, a focus lens and the like, other than the lens originally required for magnifying the light beam (modulated light) transmitted from the panel 8a and projecting it on the screen S as an image. The projection lens driving unit 9 has an actuator for changing the positions of the zoom lens and focus lens of the projection lenses 2 and further an actuator for a lens shift mechanism (tilting mechanism) having the heretofore known configuration. Thus, the projection lens driving unit 9 drives each actuator in accordance with the control from the system control unit 10 to perform zoom adjustment, focal point adjustment and lens shifting operations.

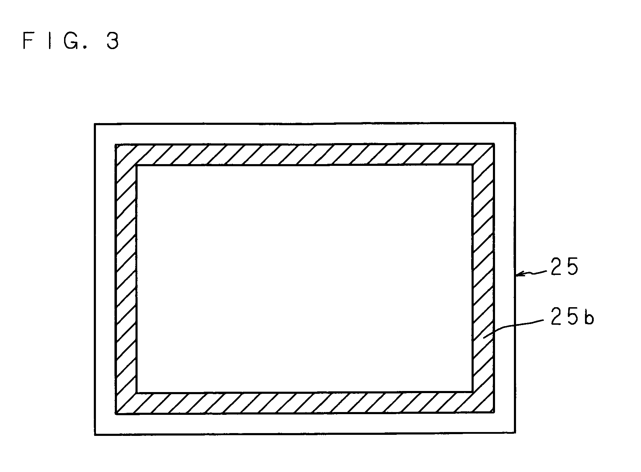

In addition, the camera unit 3 shown in FIG. 1 takes various kinds of test pattern images projected on the screen S at the time of the automatic adjustment for projection preparation and transmits the captured image to the detection unit 11. In addition, as the test pattern images projected from the projector 1, other than the color correcting test pattern image described above and focusing test pattern image (not shown), there is prepared a test pattern image 25 used for both zoom adjustment and keystone distortion correcting shown in a schematic view in FIG. 3. The test pattern image 25 has a thick frame test pattern (referred to as the thick frame portion 25b hereinafter) provided around the periphery corresponding to the outline of the image to be projected. In addition, although the thick frame portion 25b of this test pattern image 25 has the same aspect ratio as that of the panel 8a basically, the thick frame portion 25b may have various kinds of aspect ratios in accordance with the projection image having the various kinds of aspect ratios.

In addition, since the color correcting and focal point adjustment using the test pattern image for color correcting and the test pattern image for focal point adjustment have no connection with the present invention basically, their descriptions will be not made.

The detection unit 11 analyzes the captured image transmitted from the camera unit 3. This image analysis is carried out on a camera coordinate system. The camera coordinate system is set in the camera unit 3. More specifically, the camera coordinate system is set in an imaging field of the camera unit 3. Similar to the panel coordinate system set in the spatial optical modulating device 8a described above, it is the coordinate system in which an x axis is set in the horizontal direction and a y axis is set in the vertical direction with its origin at an upper left corner in the imaging field of the camera unit 3. Here, it is to be noted that the upper left corner of a panel (CCD panel) of the imaging element of the camera unit 3 is set as its origin on the camera coordinate system actually, which means that the camera coordinate is set on the image captured by the camera unit 3. ,

Therefore, the detection unit 11 detects, on the camera coordinate system, coordinate values of the positions of the four corners of the screen S that is the projection area and coordinate values of the positions of the four corners of the image, projected according to the situation of the projector 1 at that point, in the thick frame portion 25b of the test pattern image 25 shown in FIG. 3, based on the image captured by the camera unit 3 by a well-known method. When these coordinate values are detected, it is needless to say that the state of the keystone distortion of the screen S and the projection image PJ (thick frame portion 25b of the test pattern image 25) can be respectively obtained by calculation, based on that result. The detection unit 11 transmits the above detected result to the system control unit 10.

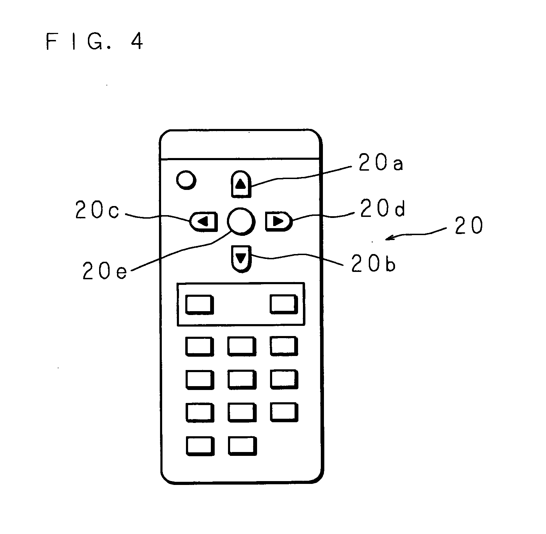

The operation unit 12 provided in the projector 1 has a plurality of buttons, switches and the like. When the buttons, switches and the like are operated by the user, the operation unit 12 receives the operation instruction according to the operated button, switch and the like and transmits it to the system control unit 10. In addition, the remote control receiver unit 13 receives an operation signal from the remote controller 20 and transmits it to the system control unit 10. FIG. 4 is a schematic view showing an appearance of the remote controller 20. As shown in FIG. 4, the remote controller 20 has up and down and right and left selection keys 20a to 20d and an enter key 20e in addition to a plurality of buttons, and a GUI is employed in which the user can select a desired item from the plurality of items displayed in a menu image on an OSD (On Screen Display) projected from the projector 1 with the selection keys 20a to 20d and the enter key 20e.

In addition, up and down and right and left selection keys and enter key are provided in the operation unit 12 also similar to the remote controller 20. Thus, when the same operation is performed in the operation unit 12 and the remote controller 20, the same instruction is transmitted to the system control unit 10.

The system control unit 10 for controlling each unit described above comprises a ROM 10a and a RAM 10b. The ROM 10a previously stores a program 10p (computer program according to the present invention) defining the control contents performed by the system control unit 10 and data for displaying various kinds of test pattern images including the test pattern image 25 shown in FIG. 3 and various kinds of menu images. The RAM 10b temporally stores various data generated in the control by the system control unit 10.

The zoom adjustment at the time of automatic adjustment performed by the system control unit 10 of the projector 1 according to this embodiment will be described in detail hereinafter. In addition, schematic procedure is as follows. It is to be noted that a description will be made of the case where the whole surface of the screen S is made to be the projection area as described above. First, the coordinate values of the four corners of the screen S on the panel coordinate system set in the panel (spatial optical modulating device) 8a are obtained on the camera coordinate system, that is, based on the positions of the four corners of the screen S as the projection area and positions of the four corners of the projection image PJ on an image 31 captured by the camera unit 3. Here, the four corners of the projection image PJ on the camera coordinate system correspond to the four corners of the panel 8a. Therefore, when a parameter for transforming the positions of the four corners of the projection image PJ on the camera coordinate system to the four corners of the panel coordinate is obtained by well-known two-dimensional projection transformation, the positions of the four corners of the screen S on the camera coordinate system can be transformed to the corresponding positions on the panel coordinate system.

Thus, based on the positions of the four corners of the screen S on the panel coordinate system, a rectangular target frame (first target frame TF1) that circumscribes the screen S on the panel coordinate system, that is, is larger than the screen S on the panel coordinate system (including the screen S) but small as much as possible can be set. Then, a final target frame (second target frame TF2) that includes the first target frame TF1 in consideration of the aspect ratio (the aspect ratio of the panel 8a basically) of the projection image is set on the panel coordinate system. The size of the second target frame TF2 is the size of the projection image, having the same size as the panel 8a originally, that is larger than the screen S but zoomed small as much as possible. Therefore, optical zoom adjustment is performed by the projection lens 2 in accordance with the ratio of the size of the second target frame TF2 to the size of the panel 8a. As a result, the four corners of the second target frame TF2 becomes the size corresponding to the four corners of the panel 8a and the screen S on the panel coordinate system is enlarged according to the enlargement ratio of the second target frame TF2. Then, finally, the keystone distortion correction is performed such that the four corners of the panel 8a match with the four corners of the enlarged screen S on the panel coordinate system. It is needless to say that, these calculations are carried out by the system control unit 10 based on each coordinate value obtained from the result of the analysis by the detection unit 11 for the image captured by the camera unit 3.

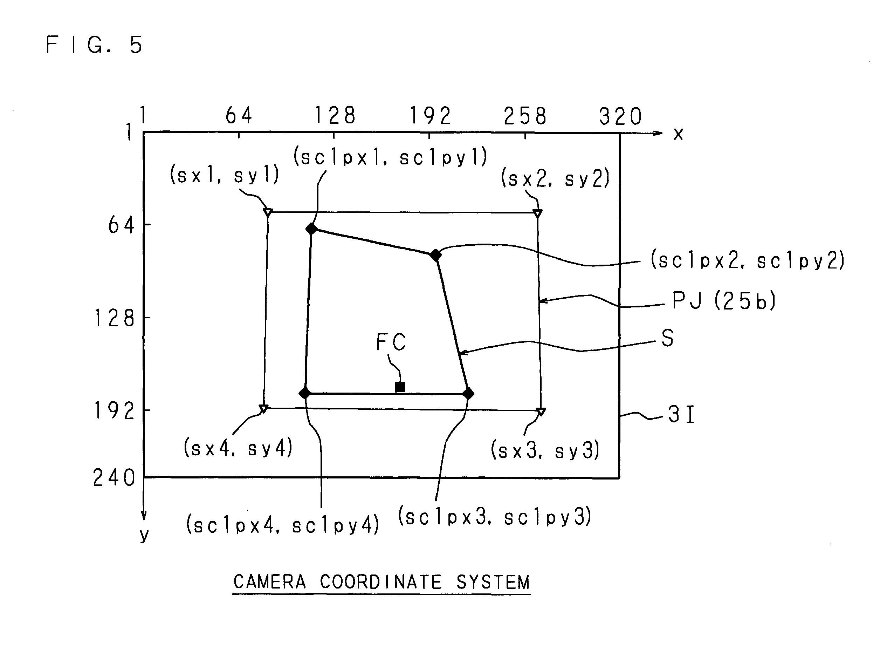

The above procedure will be described in detail with reference to actual numeric example (specific example) hereinafter. FIG 5 is a schematic view showing the states of the screen S and the projection image PJ (specifically, the thick frame portion 25b of the test pattern 25) on the image captured by the camera unit 3 of the projector 1, that is, on the camera coordinate system. In the captured image 31, although the thick frame portion 25b of the test pattern image 25 that is the outline of the projection image PJ is almost rectangular, the screen S has large keystone distortion.

Here, as described above, since the optical axis passing through the lens center of the projection lens 2 of the projector 1 is off set (does not matches with) the center of the projection image, the coordinate on the panel coordinate system, that is, the focal point coordinate is set to FP. When it is assumed that the ratio of the position of the focal point coordinate in the y axis direction (vertical direction) to the length of the panel 8a in the y axis direction is a focal point coordinate ratio "pjshiftratio" of the projector 1, its value in the specific example is "0.8838". Here, it is to be noted that the coordinate value of the focal point position in the x axis direction (horizontal direction) on the panel coordinate system is in the center of the length of the x axis direction of the panel 8a (refer to FIG. 2). Furthermore, when it is assumed that the size of the panel 8a (PJ size), that is, the sizes of the panel coordinate system in the horizontal direction and the vertical direction are "pjw" and "pjh", respectively, the values in the specific example are "1024" and "768", respectively (refer to FIG. 2). Furthermore, when it is assumed that the camera size, that is, the sizes of the camera coordinate system in the horizontal direction and the vertical direction are "caw" and "cah", respectively, their values in the specific example are "320" and "240", respectively (refer to FIG. 5).

Thus, the coordinate values of the four corners of the projection image PJ (specifically, the thick frame portion 25b of the test pattern image 25) on the camera coordinate system are defined as follows and the respective values in the specific example are shown in FIG. 5 as one example.

- Coordinate values of the four corners of the projection image PJ on the camera coordinate system

$$(sx1, sy1), (sx2, sy2), (sx3, sy3), (sx4, sy4)$$

$$= (85, 57), (236, 57), (265, 193), (79, 190)$$

Here, parameters for two-dimensional projection transformation (regular transformation parameters, that is, transformation parameters from the panel coordinate system to the camera coordinate system, and inverse transformation parameters, that is, transformation parameters from the camera coordinate system to the panel coordinate system) are calculated. The elements required for this calculation are normalized sizes (caw, cah) on the camera coordinate system and normalized offsets of the projection image PJ on the camera coordinate system. Here, it is to be noted that the normalized offset values of the projection image PJ on the camera coordinate system are the coordinate values (sx1, sy1) (sx2, sy2), (sx3, sy3), (sx4, sy4) on the camera coordinate system, respectively, and the specific values of the normalized size (caw, cah) in the specific example on the camera coordinate system are "320" and "240"as described above, and the values of the normalized offset values of the projection image PJ in the specific example on the camera coordinate system are (85, 57), (236, 57), (265, 193), (79, 190) as described above.

The regular transformation parameters (fa0, fb0, fc0, fa1, fb1, fa2, fb2) for transformation from the panel coordinate system to the camera coordinate system can be obtained from the above relation, and respective values in the specific example are "-0.007", "-0.014", "0.3293", "0.1793", "-0.006", "0", "0.1747". In addition, similarly, the inverse transformation parameters (ra0, rb0, rc0, ra1, rb1, ra2, rb2) for transformation from the camera coordinate system to the panel coordinate system can be obtained and respective values in the specific example are "-0.001", "-0.003", "-0.031", "-0.058", "-0.002", "0", "-0.059". In addition, these parameters can be found by the well-known two-dimensional projection transformation.

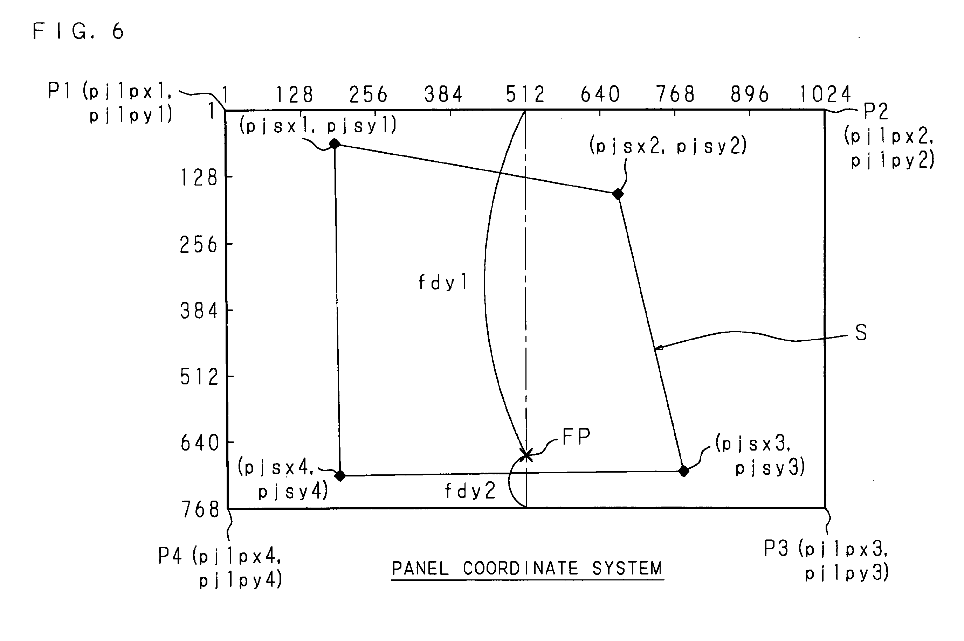

Then, the regular frame on the panel coordinate, that is, rectangular size of the panel 8a having pixels 1024 x 768 are transformed to the camera coordinate system. Here, when it is assumed that the coordinate values of the four corners P1, P2, P3 and P4 (refer to FIG. 2) of the panel 8a on the panel coordinate system are (pjlpx1, pjlpy1), (pjlpx2, pjlpy2), (pjlpx3, pjlpy3) and (pjlpx4, pjlpy4), respectively, (refer to FIG. 6), respective values in the specific example are (0,0), (1024, 0), (1024, 768) and (0, 768). Here, it is to be noted that pjw = 1024 and pjh = 768.

Then, the coordinate FP (refer to FIG. 2 and FIG. 6) of the focal point position of the projector 1 on the panel coordinate system is transformed to the coordinate FC on the camera coordinate system. Here, when it is assumed that the coordinate value at the focal point position on the panel coordinate system is made to be FP = (pjfox, pjfoy), since the x coordinate value is the center of the panel size "pjw", it is "pjw / 2" and the y coordinate value is the value multiplied by the focal point coordinate ratio "pjshiftratio (= 0.8838)" as described above, that is, "pjh x pjshiftratio" (refer to FIG. 6). The respective values in the specific example are "512" and "679" (this 679 is for convenience of the calculation although it is actually 678.76). The values transformed from the coordinate value of the focal point position on the panel coordinate system (pjfox, pjfoy) = (512, 679) to the coordinate value (intpjfox, intpjfoy) at the focal point position FC on the camera coordinate system using the regular transformation obtained in advance parameter are "round (pjfox)" and "round (pjfoy)", respectively. In addition, the respective values in the specific example are "171.2" and "175.3" (refer to FIG. 5).

The coordinate values at the four corners of the screen S on the camera coordinate system (sc1px1, sc1py1), (sc1px2 sc1py2), (sc1px3, sc1py3) and (sc1px4, sc1py4), that is, (116, 68), (200, 84), (220, 180) and (113, 68) are transformed to the coordinate values on the panel coordinate system (pjsx1, pjsy1), (pjsx2 pjsy2), (pjsx3, pjsy3) and (pjsx4, pjsy4) using the above inverse transformation parameters. In this case, the respective values in the specific example are (183.7, 65.9), (667.5, 159.2), (780.4, 701.1) and (188.6, 709.8) (refer to FIG. 6).

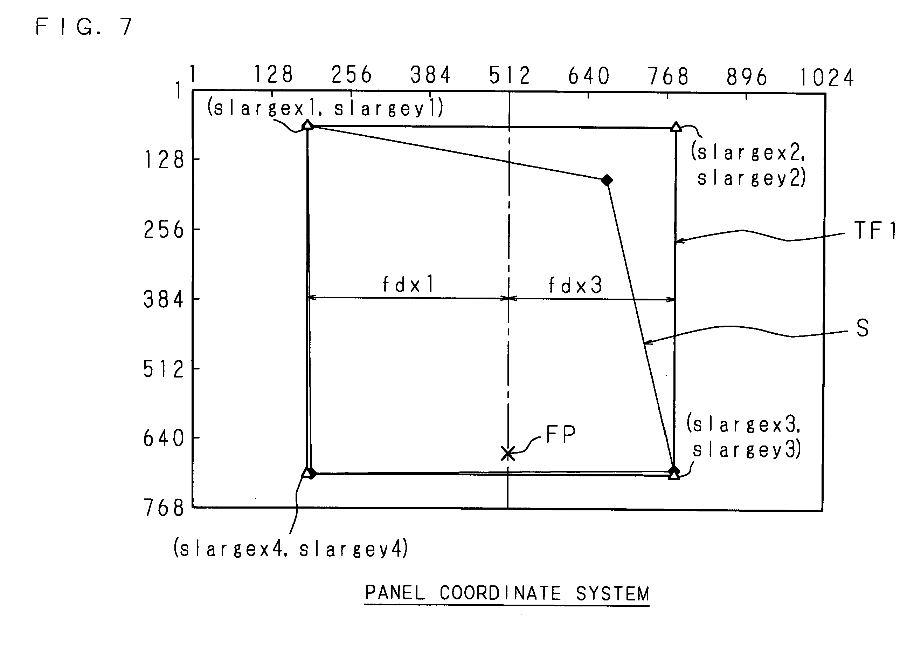

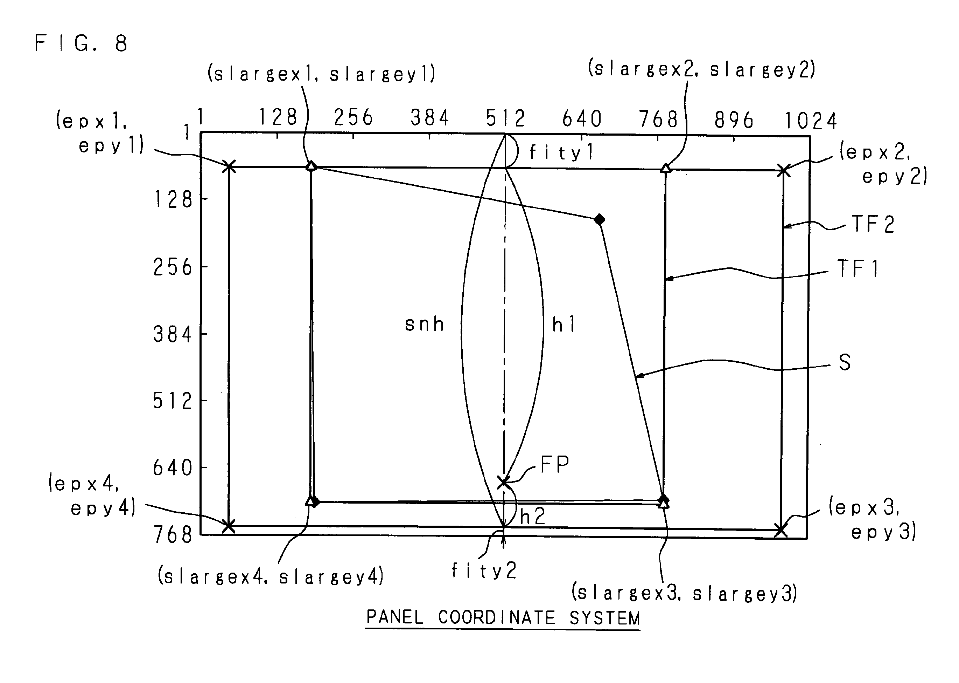

Thus, as shown in FIG. 6, the coordinate values at the four corners of the screen S on the panel coordinate system (pjsx1, pjsy1), (pjsx2 pjsy2), (pjsx3, pjsy3) and (pjsx4, pjsy4), that is, the relative size and the relative positional relation of the four corners can be obtained of the screen S to the projection image having the same size of the panel 8. Therefore, from these result, the first target frame TF1 that is larger than the screen S (including the screen S) but small as much as possible is set (refer to FIG. 7) on the panel coordinate system. Furthermore, the second target frame TF2 that includes the first target frame TF1 and is small as much as possible in consideration of the aspect ratio and the like of the image to be projected is set (refer to FIG. 8). Thus, when the second target frame TF2 is set on the panel coordinate system, the size of the second target frame TF2 to the panel 8a is obtained as the zoom ratio.

In addition, the first target frame TF1 and the second target frame TF2 are rectangle consisting of sides parallel to the x axis and the y axis of the panel coordinate on the panel coordinate system. The reason is that, since the outline of the panel 8a corresponds to the original outline of the projection image, zooming of the projection image means that the rectangle having the same aspect ratio as that of the panel 8a is reduced/enlarged on the panel coordinate system.

Here, it is assumed that the ratio (shiftratio = fdy1 / (fdy1 + fdy3) = 0.8841) of the focal point position FP from the upper side (y = 0) of the panel 8a on the panel coordinate system is a predetermined value. It is to be noted that the "fdy1" is the distance from the upper side (y = 0) of the panel 8a to the focal point position FP in the y axis direction (vertical direction) on the panel coordinate system, and the "fdy3" is the distance from the focal point position FP to the lower side (y = 767) of the panel 8a in the y axis direction (vertical direction) on the panel coordinate system, which will be described in detail below (refer to FIG. 6).

Thus, the minimum x coordinate value, the maximum x coordinate value, the minimum y coordinate value, and the maximum y coordinate value among the coordinate values of the four corners of the screen S on the panel coordinate system are obtained. In the specific example, the minimum x coordinate value is "pjsx1", the maximum x coordinate value is "pjsx3", the minimum y coordinate value is "pjsy1", and the maximum y coordinate value is "pjsy4". Therefore, when it is assumed that the coordinate values of the four corners of the first target frame TF1 on the panel coordinate system are (slargex1, slargey1), (slargex2, slargey2), (slargex3, slargey3) and (slargex4, slargey4), the minimum x coordinate value among the x coordinate values of the four corners of the screen S is selected as "slargex1" (and "slargex4"), and the maximum x coordinate value among the x coordinate values of the four corners of the screen S is selected as "slargex2" (and "slargex3"). Also, the minimum y coordinate value among the y coordinate values of the four corners of the screen S is selected as "slargey1" (and "slargey2") and the maximum y coordinate value among the y coordinate values of the four corners of the screen S is selected as "slargey3" (and "slargey4"). Their calculating expressions and values in the specific example are as follows (refer to FIG.7).

$$\mathrm{slargex1\ (slargex4) = if\ (pjsx4 < pjsx1,\ pjsx4,\ pjsx1) = 183.72}$$

$$\mathrm{slargey1\ (slargey2) = if\ (pjsy1 < pjsy2,\ pjsy1,\ pjsy2) = 65.863}$$

$$\mathrm{slargex3\ (slargex2) = if\ (pjsx3 < pjsx2,\ pjsx2,\ pjsx3) = 780.44}$$

$$\mathrm{slargey3\ (slargey4) = if\ (pjsy3 < pjsy4,\ pjsy3,\ pjsy4) = 709.78}$$

When the rectangle obtained by these coordinate values is set on the panel coordinate system, it circumscribes the screen S on the panel coordinate system, that is, this is the first target frame TF1.

Next, the second target frame TF2 is set. First, the horizontal frames of the second target frame TF2, that is, the x coordinate values at both ends of the lateral direction are obtained. The x direction distance "fdx1" between the x coordinate value (slargex1) of the left side (closer to the origin) of the first target frame TF1 and the focal point position on the panel coordinate system, and the x direction distance "fdx3" between the x coordinate value (slargex3) of the right side (farther from the origin) and the focal point position (x coordinate value is pjforx) are calculated and the larger one is obtained as the "maxfdx". Then, the horizontal direction width "snw" is obtained by doubling that value and it is symmetric with respect to the focal point position of the first target frame TF1, which becomes a tentative width in the horizontal direction of the second target frame TF2. Their calculating expressions and values in the specific example are as follows (refer to FIG. 7).

$$\mathrm{fdx1 = pjforx - slargex1 = 328.28}$$

$$\mathrm{fdx3 = slargex3 - pjforx = 268.44}$$

$$\mathrm{maxfdx = if\ (fdx1 > fdx3,\ fdx1,\ fdx3)}$$

Here, since the "fdx1" is greater, maxfdx = 328.28. Therefore, the width "snw" in the horizontal direction centering on the focal point position of the target frame TF1 becomes

$$\mathrm{snw = maxfdx \times 2 = 656.56.}$$

Next, the y coordinate values of vertical frames, that is, both ends of the vertical direction of the second target frame TF2 are obtained. In addition, when it is assumed that the maximum and minimum values of the coordinate values of the four corners of the projection image information, specifically, the panel 8a are "avex1", "avey1", "avex3" and "avey3", respectively, these values in the specific example are known as resolution of the panel 8a, that is, "avex1" = "avey1" = "0", "avex3" = "1024" and "avey3" = "768".

Here, the values in the specific example of the distance "fdy1" in the y axis direction (vertical direction) from the upper side (y = 0) of the panel 8a to the focal point position FP (y coordinate value is pjfory = 679) and the distance "fdy3" in the y axis direction (vertical direction) from the focal point position FP to the lower side (y = 767) of the panel 8a on the panel coordinate system are as follows (refer to FIG. 7)

$$\text{fdy1} = \text{pjfory} - \text{avey1} = 679.0$$

$$\text{fdy3} = \text{avey3} - \text{pjfory} = 89$$

In addition, the ratio "shiftratio" of the focal point position FP from the upper side (y = 0) of the panel 8a on the panel coordinate system is as follows.

$$\text{shiftratio} = \text{fdy1} / (\text{fdy1} + \text{fdy3})$$

$$= 679.0 / (679.0 + 89)$$

$$= 0.8841$$

Next, the enlargement ratios from the focal point position on the panel coordinate system (ratio of the upper and lower sides of the second target frame TF2 to the upper and lower sides of the panel 8a) are obtained as "fratioy1" on the upper side (origin side) from the focal point position and as "fratioy3" on the lower side, and the greater one of them is obtained as the maximum enlargement ratio "maxfratioy".

$$\text{fratioy1} = \text{if } (\text{fdy1} < 0,$$

$$- (\text{avey1} - \text{slargey1}) / \text{fdy1}, (\text{avey1} - \text{slargey1}) / \text{fdy1}))$$

$$\text{fratioy3} = \text{if } (\text{fdy3} > 0,$$

$$- (\text{avey3} - \text{slargey3}) / \text{fdy3}, (\text{avey3} - \text{slargey3}) / \text{fdy3}))$$

$$\text{maxfratioy} = \text{if } (\text{fratioy1} > \text{fratioy3}, \text{fratioy1}, \text{fratioy3})$$

In addition, the values of the "fratioy1" and "fratioy3" in the specific example are "-0.097" and "-0.654" and the maximum enlargement ratio "maxfratioy" becomes "-0.097".

When the maximum enlargement ratio "maxfratioy" is obtained as described above, a target height "h1" of the second target frame TF2 upward from the focal point position FP and a target height "h2" of the second target frame TF2 downward from the focal point position FP on the panel coordinate system are obtained as follows and the y coordinate values "fity1" and "fity3" of the upper and lower horizontal frames of the second TF2, and a whole target height "snh" of the second target frame TF2 are obtained from the relation between the above result and the y coordinate value of the focal point position FP on the panel coordinate system. Their calculating expressions and values in the specific example are as follows (refer to FIG. 8)
$$h1 = fdy1 \times (1 + maxfratioy) = 613.14$$

$$h2 = fdy3 \times (1 + maxfratioy) = 80.367$$

$$fity1 = pjfory - h1 = 65.863$$

$$fity3 = pjfory + h2 = 759.37$$

$$snh = h1 + h2 = 693.5$$

Here, since the value of the "snh" obtained as "h1 + h2" in the specific example is equal to the value of the difference (absolute value) between the "fity1" and "fity3"in the specific example, it can be confirmed that the above calculations are right.

Thus, as the tentative width in the horizontal direction "snw" and the target height "snh" of the second target frame TF2 are obtained, the second target frame TF2 is finally set by matching the aspect ratio of the panel 8a with the larger one of the horizontal direction width "snw" and the target height "snh". Here, the aspect ratio of the panel 8a is 1024/768, that is, 1.3333..., and set to 4:3 in general. However, as the aspect ratio of the panel 8a is a value as the specific example of this embodiment, the following calculation may be performed appropriately using the aspect ratio of the panel 8a that is actually used. Still furthermore, the following calculation may be performed by virtually setting the aspect ratio of the image to be actually projected that is different from the aspect ratio of the panel 8a, to the panel 8a having the aspect ratio of 4:3 in this embodiment.

When it is assumed that the aspect ratio of the panel 8a is "aspratio (= pjw / pjh)", the value in the specific example becomes "1.333...". Here, the actual aspect ratio of the second target frame TF2 tentatively set is obtained as "maxratioy" by the following expression.

$$maxratioy = (snh \times (pjw / pjh) / snw$$

As a result, since the value of the "maxratioy" in the specific example is "1.4084", the actual aspect ratio of the panel 8a "aspratio" is obtained by making the values become the larger one of the tentatively set horizontal direction width "snw" and vertical direction height "snh" of the second target frame FT2 to "fitw" and "fith", respectively.
$$fitw = if (maxratioy < 1, snw, snh \times aspratio)$$

$$fith = if (maxratioy > 1, snh, snw \times aspratio)$$

Next, the heights in the vertical direction are obtained separately as the upper side height "fith1" and the lower side height "fith2" from the focal point position FP on the panel coordinate system.
$$\text{fith1} = \text{siftratio} \times \text{fith}$$

$$\text{fith2} = \text{fith} - \text{fith1}$$

From the above result, the actual coordinate values of the second target frame TF2 are obtained. More specifically, the coordinate values (epx1, epy1) and (epx3, epy3) of the two corners that are closest corner and the farthest corner to and from the origin on the panel coordinate system among four corners of the second target frame TF2 are obtained by making the coordinate value (pjforx, pjfory) of the focal point position on the panel coordinate system to be the criterion and the second target frame TF2 is set based on this result.

$$\text{epx1} = \text{pjforx} - (\text{fitw} / 2)$$

$$\text{epy1} = \text{pjfory} - \text{fith1}$$

$$\text{epx3} = \text{pjforx} + (\text{fitw} / 2)$$

$$\text{epy3} = \text{pjfory} - \text{fith2}$$

In addition, the values in the specific example become "epx1 = 49.664", "epy1 = 65.863", "epx3 = 974.34" and "epy3 = 759.37". Therefore, the values of the final coordinate values of the four corners of the second target frame TF2 in the specific example become as follows (refer to FIG. 8).

$$(\text{epx1}, \text{epy1}) = (49.664, 65.863)$$

$$(\text{epx2}, \text{epy2}) = (974.34, 65.863)$$

$$(\text{epx3}, \text{epy3}) = (974.34, 759.37)$$

$$(\text{epx4}, \text{epy4}) = (49.664, 759.37)$$

Finally, the enlargement ratio, that is, the zoom ratio is obtained. More specifically, the enlargement ratio "zratio" is obtained from the ratio of the difference "diffzx" between the horizontal direction width "avew = 1024" of the panel 8a and the horizontal direction width "fitw" of the second target frame TF2 to the horizontal direction width "avew" of the panel 8a.

$$\text{diffzx} = \text{fitw} - \text{avew}$$

$$\text{zratio} = \text{diffzx} / \text{avew}$$

As the values in the specific example become "-99.33" and "-0097" and in this embodiment, the size is enlarged by "-0.097" times or reduced by "0.097" times (the size becomes 0.903 times of the original size). That is, the value "-0.097" is the zoom ratio by which the size is transformed actually from the original size of the projection image. In addition, when the zoom ratio is obtained as described above, the instruction is given from the system control unit 10 to the projection lens driving unit 9 and the zoom lens built in the projection lens 2 is driven.

As a result of zoom adjustment, since the size of the second target frame TF2 matches with that of the panel 8a, the keystone distortion is to be corrected next such that the four corners of the panel 8a are conformed with the four corners of the screen S on the panel coordinate system. The heretofore known technique can be used in such keystone distortion correction.

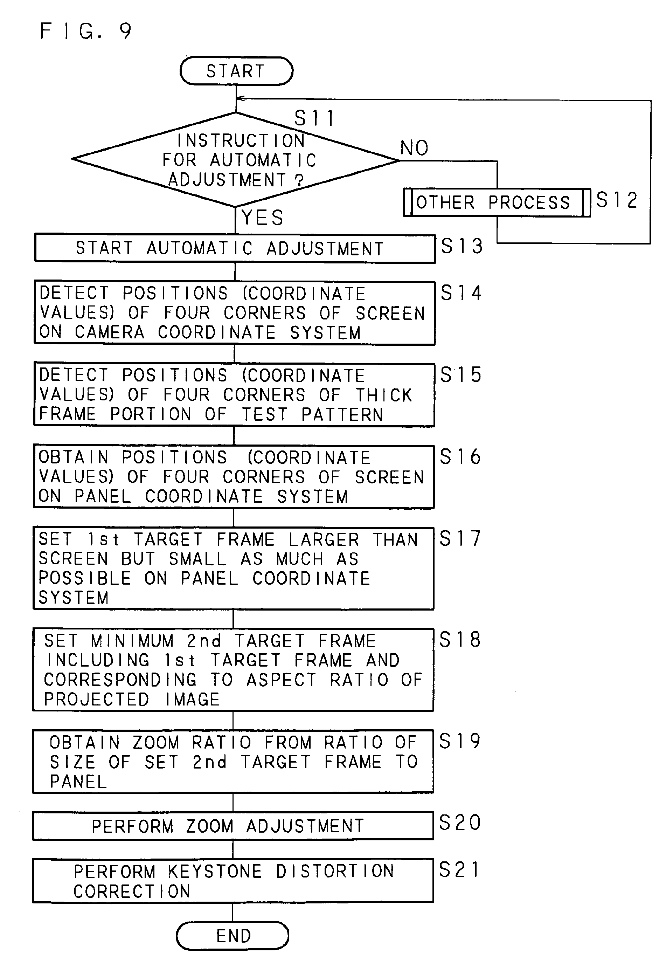

Although the system control unit 10 carries out the above processing in accordance with the program 10p (computer program according to the present invention) stored in the ROM 10a, its procedure will be described with reference to a flowchart shown in FIG. 9. In addition, the following description is also the processing procedure when the whole surface of the screen S is used as the projection area.

First, the user sets the projector 1 in front of the screen S and operates the operation unit 12 or the remote controller 20 to give the instruction to the projector 1 for performing the automatic adjustment for projection preparation. The system control unit 10 observes whether the instruction for automatic adjustment for the projection preparation or another instruction is accepted (step S11). When the instruction other than the instruction for the automatic adjustment for the projection preparation is accepted (NO at step S11), the system control unit 10 carries out the process corresponding to the accepted instruction (step S12) and observes whether the next instruction is accepted or not. When the instruction for the automatic adjustment for the projection preparation is accepted (YES at step S11), the system control unit 10 starts the above-described zoom adjustment as well as the automatic adjustment for items of the color correction and focal point adjustment (step S13). In addition, the description of the color correction and focal point adjustment will be omitted in the following description.

In starting the automatic adjustment, the system control unit 10 detects the positions (coordinate values) of the four corners of the screen S on the camera coordinate system from the image captured by the camera unit 3 (step S14), and then detects the positions (coordinate values) of the four corners of the thick frame portion 25b that is the test pattern for detecting the projection image frame (step S15), and based on the positional relation between them, obtains the positions (coordinate values) of the four corners of the screen S on the panel coordinate system (step S16).

Then, the system control unit 10 sets the rectangular first target frame TF1 that is larger than the screen S (including the screen S) but small as much as possible, specifically, that circumscribes the screen S on the panel coordinate system (step S17). When the first target frame TF1 is set, the system control unit 10 sets the minimum second target frame TF2 that includes the set first target frame TF1 and corresponds to the aspect ratio of the projection image (step S18). Thus, when the second target frame TF2 is set, the system control unit 10 obtains the zoom ratio from the ratio of the size of the set second target frame TF2 to the panel 8a (step S19).

When the zoom ratio is obtained as described above, the system control unit 10 moves the zoom adjustment lens of the projection lens 2 by controlling the projection lens driving unit 9 for performing zoom adjustment (step S20). Then, after zoom adjustment, the system control unit 10 performs the keystone distortion correction so as to mach the four corners of the panel 8a, that is, the four corners of the projection image on the panel coordinate system with the four corners of the screen S on the panel coordinate system (step S21).

As described above, when the system control unit 10 carries out the program 10p stored in the ROM 10a, the projection image (specifically, the thick frame portion 25b of the test pattern image 25) is automatically projected on the screen S at the optimum zoom ratio for correcting the keystone distortion thereafter.

In addition, although the first target frame TF1 and the second target frame TF2 are set based on the image captured by the camera unit 3 in the above embodiment, regarding the projection area, when the positions of the four corners of the screen S are detected by photo-detection sensors such as photodiodes arranged at the four corners of the screen S in the case the whole surface of the screen S is used as the projection area, for example, the present invention can be applied to it. In addition, when the projection body is not the screen S (wall surface, white board and the like) also, similar to the above, when the photo-detecting sensors such as photodiodes are arranged at the four corners of the projection area, the present invention can be applied to it.

Furthermore, although the whole surface of the screen S that is the projection body is used as the projection area in the above embodiment, the projection area can be set as any rectangle having a size smaller than the outline of the screen on the screen or on the wall surface or the white board.

**Claims**

1. An image projecting method for making spatial optical modulating means generate modulated light according to information representing a rectangular projection image to be projected on a rectangular projection area, and, at a time of making a projection lens capable of optically reducing/enlarging the image project the modulated light generated by said spatial optical modulating means, for projecting an image so as to become a rectangular image on said projection area by making said spatial optical modulating means generate modulated light according to information representing an image transformed from said rectangular projection image, **characterized in that** a reducing/enlarging ratio of said projection lens required for conforming the four corners of the projection image with the four corners of said projection area is obtained, based on the relative positional relation between the positions of the four corners of said projection area and the positions of the four corners of the projected projection image.

2. An image projecting method for making spatial optical modulating means generate modulated light according to information representing a rectangular projection image to be projected on a rectangular projection area, and, at a time of making a projection lens capable of optically reducing/enlarging the image project the modulated light generated by said spatial optical modulating means, for projecting an image so as to become a rectangular image on said projection area by making said spatial optical modulating means generate modulated light according to information representing an image transformed from said rectangular projection image, **characterized by** comprising:

   obtaining a reducing/enlarging ratio of said projection lens required for conforming the four corners of the projection image with the four corners of said projection area, based on the relative positional relation between the positions of the four corners of said projection area and the positions of the four corners of the projected projection image; and
   calculating a transformation amount of said rectangular projection image on said spatial optical modulating means so that the four corners of the projection image projected by reducing/enlarging by said projection lens according to the obtained reducing/enlarging ratio conforms with the four corners of said rectangular projection area.

3. The image projecting method as set forth in claim 1 or 2, **characterized by** comprising:

   capturing, by imaging means, an image including the positions of the four corners of said projection image when said spatial optical modulating means generates modulated light according to information representing said projection image not transformed and the modulated light generated by said spatial optical modulating means is projected on said projection area through said projection lens and the positions of the four corners of said projection area;
   specifying, from the image captured by said imaging means, the positions of the four corners of said projection area and the positions of the four corners of said projection image on a coordinate system set in said imaging means;
   transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and
   obtaining the reducing/enlarging ratio of said projection lens based on the positions of the four corners of said projection area transformed to the positions on the coordinate system set in said spatial optical modulating means.

4. The image projecting method as set forth in claim 3, **characterized by** comprising:

   setting, on the coordinate system set in said spatial optical modulating means, a target frame for projecting said projection image with a minimum size including the positions of the four corners of said projection area transformed to the positions on the coordinate system set in said spatial optical modulating means; and
   obtaining the reducing/enlarging ratio of said projection lens from the ratio between the size of the coordinate system set in said spatial optical modulating means and the size of the set target frame.

5. The image projecting method as set forth in claim 4, **characterized in that** setting of said target frame is performed by:

   setting, on the coordinate system set in said spatial optical modulating means, a rectangular first target frame with a minimum size including the positions of the four corners of said projection area transformed to the positions on the coordinate system set in said spatial optical modulating means; and

setting, on the coordinate system set in said spatial optical modulating means, a second target frame having the same aspect ratio as that of said projection image, based on the position of said first target frame on the coordinate system set in said spatial optical modulating means.

**6.** The image projecting method as set forth in claim 4, **characterized in that**

the transformation of the positions of the four corners of said projection area specified on the coordinate system set in said imaging means to the positions on the coordinate system set in said spatial optical modulating means is performed using two-dimensional projection transformation based on the relation between the positions of the four corners of said projection image specified on the coordinate system set in said imaging means and the positions of the four corners of said projection image on the coordinate system set in said spatial optical modulating means.

**7.** A projector, comprising: spatial optical modulating means for generating modulation light according to information representing a rectangular projection image to be projected on a rectangular projection area; a projection lens for projecting the modulated light generated by said spatial optical modulating means on said rectangular projection area; and optical zooming means for optically reducing/enlarging the projection image by controlling said projection lens; and for projecting an image so as to become a rectangular image on said projection area by making said spatial optical modulating means generate modulated light according to information representing an image transformed from said rectangular projection image, **characterized by** comprising

reducing/enlarging ratio calculating means for obtaining a reducing/enlarging ratio of the projection image by said optical zooming means required for conforming the four corners of said projection image with the four corners of said projection area, based on the relative positional relation between the positions of the four corners of said projection area and the positions of the four corners of the projected projection image.

**8.** A projector, comprising: spatial optical modulating means for generating modulation light according to information representing a rectangular projection image to be projected on a rectangular projection area; a projection lens for projecting the modulated light generated by said spatial optical modulating means on said rectangular projection area; and optical zooming means for optically reducing/enlarging the projection image by controlling said projection lens; and for projecting an image so as to become a rectangular image on said projection area by making said spatial optical modulating means generate modulated light according to information representing an image transformed from said rectangular projection image, **characterized by** comprising:

reducing/enlarging ratio calculating means for obtaining a reducing/enlarging ratio of the projection image by said optical zooming means required for conforming the four corners of said projection image with the four corners of said projection area, based on the relative positional relation between the positions of the four corners of said projection area and the positions of the four corners of said projected projection image; and

calculating means for calculating a transformation amount of said rectangular projection image on said spatial optical modulating means so that the four corners of the projection image projected by reducing/enlarging by said projection lens according to the obtained reducing/enlarging ratio conforms with the four corners of said rectangular projection area.

**9.** The projector as set forth in claim 7 or 8, **characterized by** comprising:

imaging means for capturing an image including the positions of the four corners of said projection image when said spatial optical modulating means generates modulated light according to information representing said projection image not transformed and the modulated light generated by said spatial optical modulating means is projected on said projection area through said projection lens and the positions of the four corners of said projection area;

specifying means for, from the image captured by said imaging means, specifying the positions of the four corners of said projection area and the positions of the four corners of said projection image on a coordinate system set in said imaging means;

coordinate system transforming means for transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and

reducing/enlarging ratio calculating means for obtaining the reducing/enlarging ratio of said projection lens based on the positions of the four corners of said projection area transformed to the positions on the coordinate system set in said spatial optical modulating means.

10. The projector as set forth in claim 9, **characterized by** comprising:

target frame setting means for setting, on the coordinate system set in said spatial optical modulating means, a target frame for projecting said projection image with a minimum size including the positions of the four corners of said projection area transformed to the positions on the coordinate system set in said spatial optical modulating means,

wherein said reducing/enlarging ratio calculating means obtains the reducing/enlarging ratio of said projection lens from the ratio between the size of the coordinate system set in said spatial optical modulating means and the size of said target frame set by said target frame setting means.

11. The projector as set forth in claim 10, **characterized in that** said target frame setting means comprises:

means for setting, on the coordinate system set in said spatial optical modulating means, a rectangular first target frame with a minimum size including the positions of the four corners of said projection area transformed to the positions on the coordinate system set in said spatial optical modulating means, and
means for setting, on the coordinate system set in said spatial optical modulating means, a second target frame having the same aspect ratio as that of said projection image, based on the position of the first target frame set by said means on the coordinate system set in said spatial optical modulating means.

12. The projector as set forth in claim 10, **characterized in that** said coordinate system transforming means transforms the positions of the four corners of said projection area specified on the coordinate system set in said imaging means, to the positions on the coordinate system set in said spatial optical modulating means using two-dimensional projection transformation based on the relation between the positions of the four corners of said projection image specified on the coordinate system set in said imaging means and the positions of the four corners of said projection image on the coordinate system set in said spatial optical modulating means.

13. A projector, comprising: spatial optical modulating means for generating modulation light according to information representing a rectangular projection image to be projected on a rectangular projection area; a projection lens for projecting the modulated light generated by said spatial optical modulating means on said rectangular projection area; optical zooming means for optically reducing/enlarging the projection image by controlling said projection lens; and an imaging device; and for obtaining a reducing/enlarging ratio of the projection image by said optical zooming means required for conforming the four corners of the projection image with the four corners of said projection area based on the relative positional relation between the positions of the four corners of said projection area and the positions of the four corners of the projected projection image, in order to project an image so as to become a rectangular image on said projection area by making said spatial optical modulating means generate modulated light according to information representing an image transformed from said rectangular projection image, **characterized by** comprising:

means for making said spatial optical modulating means generate modulated light representing a test pattern indicating the four corners of said rectangular projection image and for projecting it from said projection lens on the rectangular projection area;
means for making said imaging device capture an image of a state where said test pattern is projected toward said rectangular projection area;
means for detecting the positions of the four corners of said rectangular projection area on a coordinate system set in said imaging device from the image captured by said imaging device;
means for detecting the positions of the four corners of said projected test pattern on the coordinate system set in said imaging device from the image captured by said imaging device;
means for transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and
means for obtaining the reducing/enlarging ratio of said projection image based on the positions of the four corners of said projection area transformed to the positions on the coordinate system set in said spatial optical modulating means.

**14.** The projector as set forth in claim 13, **characterized in that** said means for obtaining the reducing/enlarging ratio comprises:

means for setting, on the coordinate system set in said spatial optical modulating means, a rectangular first target frame with a minimum size including the positions of the four corners of said projection area transformed to the positions on the coordinate system set in said spatial optical modulating means; and
means for setting, on the coordinate system set in the spatial optical modulating means, a second target frame having the same aspect ratio as that of the projection image, based on the position of said first target frame on the coordinate system set in said spatial optical modulating means.

**15.** A computer program causing a computer, that comprises: spatial optical modulating means for generating modulation light according to information representing a rectangular projection image to be projected on a rectangular projection area; a projection lens for projecting the modulated light generated by said spatial optical modulating means on said rectangular projection area; optical zooming means for optically reducing/enlarging the projection image by controlling said projection lens; and an imaging device; and that projects a rectangular image on said projection area by making said spatial optical modulating means generate modulated light according to information representing an image transformed from said rectangular projection image, to obtain a reducing/enlarging ratio of the projection image by said optical zooming means required for conforming the four corners of said projection image with the four corners of said projection area based on the relative positional relation between the positions of the four corners of said projection area and the positions of the four corners of said projected projection image, **characterized by** comprising:

a procedure of making said spatial optical modulating means generate modulated light representing a test pattern indicating the four corners of said rectangular projection image and projecting it toward said rectangular projection area from said projection lens;
a procedure of making said imaging device capture the image of the state where said test pattern is projected on said rectangular projection area;
a procedure of detecting the positions of the four corners of said rectangular projection area on a coordinate system set in said imaging device from the image captured by said imaging device;
a procedure of detecting the positions of the four corners of said projected test pattern on the coordinate system set in said imaging device from the image captured by said imaging device;
a procedure of transforming the positions of the four corners of said projection area specified on the coordinate system set in said imaging means to the positions on a coordinate system set in said spatial optical modulating means, based on the relation between the positions of the four corners of said projection image specified on the coordinate system set in said imaging means and the coordinate system set in said spatial optical modulating means; and
a procedure of obtaining the reducing/enlarging ratio of said projection image based on the positions of the four corners of said projection area transformed to the positions on the coordinate system set in said spatial optical modulating means.

**16.** The computer program as set forth in claim 15, **characterized in that** said procedure of obtaining the reducing/ enlarging ratio comprises:

a procedure of setting, on the coordinate system set in said spatial optical modulating means, a rectangular first target frame with a minimum size including the positions of the four corners of said projection area transformed to the positions on the coordinate system set in said spatial optical modulating means; and
a procedure of setting, on the coordinate system set in the spatial optical modulating means, a second target frame having the same aspect ratio as that of the projection image, based on the position of said first target frame on the coordinate system set in said spatial optical modulating means.

FIG. 1

SCREEN — S

PROJECTOR — 1

PROJECTION LENS — 2

PROJECTION LENS DRIVE UNIT — 9

CAMERA UNIT — 3

DETECTION UNIT — 11

PROJECTION DEVICE UNIT — 8

SPATIAL OPTICAL MODULATING DEVICE (PANEL) — 8a

TEST PATTERN IMAGE SWITCHING UNIT — 7

COLOR CONTROL UNIT — 6

IMAGE CONVERSION UNIT — 5

EXTERNAL CONNECTION UNIT — 4

SYSTEM CONTROL UNIT — 10

ROM — 10a
PROGRAM — 10p
RAM — 10b

OPERATION UNIT — 12

REMOTE CONTROL RECEIVING UNIT — 13

20

FIG. 2

PANEL COORDINATE SYSTEM

FIG. 3

25
25b

FIG. 4

FIG. 5

CAMERA COORDINATE SYSTEM

EP 1 814 324 A1

FIG. 6

PANEL COORDINATE SYSTEM

EP 1 814 324 A1

# FIG. 7

PANEL COORDINATE SYSTEM

EP 1 814 324 A1

FIG. 8

PANEL COORDINATE SYSTEM

EP 1 814 324 A1

FIG. 9

START

S11 INSTRUCTION FOR AUTOMATIC ADJUSTMENT ?
— NO → OTHER PROCESS S12
YES

START AUTOMATIC ADJUSTMENT — S13

DETECT POSITIONS (COORDINATE VALUES) OF FOUR CORNERS OF SCREEN ON CAMERA COORDINATE SYSTEM — S14

DETECT POSITIONS (COORDINATE VALUES) OF FOUR CORNERS OF THICK FRAME PORTION OF TEST PATTERN — S15

OBTAIN POSITIONS (COORDINATE VALUES) OF FOUR CORNERS OF SCREEN ON PANEL COORDINATE SYSTEM — S16

SET 1st TARGET FRAME LARGER THAN SCREEN BUT SMALL AS MUCH AS POSSIBLE ON PANEL COORDINATE SYSTEM — S17

SET MINIMUM 2nd TARGET FRAME INCLUDING 1st TARGET FRAME AND CORRESPONDING TO ASPECT RATIO OF PROJECTED IMAGE — S18

OBTAIN ZOOM RATIO FROM RATIO OF SIZE OF SET 2nd TARGET FRAME TO PANEL — S19

PERFORM ZOOM ADJUSTMENT — S20

PERFORM KEYSTONE DISTORTION CORRECTION — S21

END

F I G. 1 0 A

F I G. 1 0 B

FIG. 11A

FIG. 11B

PJ

S

S

1

1

EP 1 814 324 A1

## INTERNATIONAL SEARCH REPORT

| | International application No. |
|---|---|
| | PCT/JP2005/019110 |

A. CLASSIFICATION OF SUBJECT MATTER
*H04N5/74*(2006.01), *G03B21/00*(2006.01)

According to International Patent Classification (IPC) or to both national classification and IPC

B. FIELDS SEARCHED

Minimum documentation searched (classification system followed by classification symbols)
*H04N5/74*(2006.01), *G03B21/00*(2006.01)

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 3722146 B1 (Seiko Epson Corp.), 22 September, 2005 (22.09.05), Full text; all drawings (Family: none) | 1-16 |
| A | JP 2000-241874 A (NEC Corp.), 08 September, 2000 (08.09.00), Full text; all drawings (Family: none) | 1-16 |
| A | JP 2004-260785 A (NEC View Technology, Ltd.), 16 September, 2004 (16.09.04), Full text; all drawings (Family: none) | 1-16 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 December, 2005 (06.12.05) | 20 December, 2005 (20.12.05) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
|---|
| PCT/JP2005/019110 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2001-83949 A  (Japan Science and Technology Corp.),<br>30 March, 2001 (30.03.01),<br>Par. Nos. [0089] to [0097]; Figs. 45 to 56<br>& US 2004/61838 A1      & EP 1385335 A1 | 1-16 |

Form PCT/ISA/210 (continuation of second sheet) (April 2005)

**REFERENCES CITED IN THE DESCRIPTION**

**Patent documents cited in the description**

- JP H3215841 B
- JP H627431 A
- JP 2000081601 A
- JP H5323451 A
- JP 2000241874 A